# DEMANDE DE BREVET EUROPEEN

(11) **EP 1 118 965 A1**
(43) Date de publication de la demande: **25.07.2001**
(21) Numéro de dépôt: 01400022.8
(22) Date de dépôt: 05.01.2001
(51) Int. Cl.: G07C 5/00, G07C 5/08

(54) **Dispositif de contrôle d'un véhicule routier et un système électronique embarqué comportant un tel dispositif**

(30) Priorité: 07.01.2000 FR 0000197
(71) Demandeur: General Trailers France, 91130 Ris Orangis (FR)
(72) Inventeur: Llerena, Laurent, 10300 Sainte Savine (FR)
(74) Mandataire: Catherine, Alain

(57) **Abrégé**

L'invention concerne un dispositif de contrôle (A) permanent d'au moins une caractéristique technique d'un véhicule routier destiné à être monté sur le véhicule à contrôler.

Le dispositif de contrôle comprend des moyens d'identification (1) du véhicule à contrôler, des moyens générateur d'informations (2) représentant l'utilisation du véhicule à contrôler, des moyens d'acquisition d'informations (3) représentant la (ou) les caractéristique(s) technique(s) à contrôler, des moyens d'enregistrement d'informations (4), des moyens d'exploitation (5) des informations enregistrées, et des moyens de mise à disposition (6) d'un résultat de l'exploitation des informations enregistrées.

## Description

L'invention concerne un dispositif de contrôle d'un véhicule routier et un système électronique embarqué comportant un tel dispositif.

Le calendrier des visites techniques d'un véhicule routier est établi suivant le nombre de kilomètres parcourus. Chaque type d'opération est associé à un point kilométrique. A ce calendrier des visites techniques se superpose celui des passages aux Mines établi suivant un programme calendaire.

Alors qu'il paraît simple et suffisant de gérer la périodicité des visites techniques et des passages aux Mines par un relevé des compteurs kilométriques dont les véhicules à contrôler sont équipés et par une planification calendaire, il s'est avéré insuffisant de gérer la maintenance des véhicules routiers uniquement selon ces critères. De plus, les véhicules routiers ne retournant pas systématiquement, à la fin de chaque mission, à leur base attribuée, il y a le risque que le suivi des véhicules routiers, pour les besoins de la maintenance et de sa planification, ne soit pas effectué de manière fiable.

Le but de l'invention est de proposer des moyens permettant d'assurer à la fois un contrôle sûr de l'utilisation d'un véhicule routier et l'acquisition de données ou d'informations sur l'état technique du véhicule routier permettant d'adapter la planification de la maintenance aux contraintes réelles que le véhicule subit pendant son utilisation.

Le but de l'invention est atteint par un dispositif de contrôle permanent d'au moins une caractéristique technique d'un véhicule routier destiné à être monté sur le véhicule à contrôler.

Selon l'invention, le dispositif de contrôle comprend des moyens d'identification du véhicule à contrôler, des moyens générateur d'informations représentant l'utilisation du véhicule à contrôler, des moyens d'acquisition d'informations représentant une (ou des) caractéristique(s) technique(s) à contrôler, des moyens d'enregistrement d'informations, des moyens d'exploitation des informations enregistrées, et des moyens de mise à disposition d'un résultat de l'exploitation des informations enregistrées.

L'identification du véhicule à contrôler peut se faire selon deux principes. Le premier consiste à utiliser uniquement les informations propres au véhicule telles que son numéro d'immatriculation, sa marque, son type et le numéro de série. Ces informations sont alors enregistrées dans les moyens d'identification lors du montage de ceux-ci sur le véhicule.

Le second principe est celui selon lequel on intègre dans les informations d'identification aussi des informations sur le dispositif de contrôle. Ce principe concerne particulièrement le cas de l'utilisation de plusieurs types de dispositifs de contrôle adaptés à différents types de véhicule, comme cela sera expliqué plus loin.

Les informations représentant l'utilisation du véhicule sont d'abord la date, l'heure et les minutes du moment de l'enregistrement d'une ou de plusieurs caractéristiques techniques, qui constituent l'état technique du véhicule à contrôler, du point kilométrique et éventuellement d'autres informations représentatives de l'utilisation du véhicule. Ces informations peuvent être par exemple la vitesse et la charge du véhicule, la pression des pneumatiques ou la pression des coussins de suspension.

Les informations représentant la ou les caractéristiques techniques à contrôler, et représentant par là l'état technique du véhicule, sont constituées par des signaux électriques engendrés par, ou au moyen de, capteurs appropriés disposés auprès de chacun des éléments du véhicule routier dont la ou les caractéristiques techniques sont à contrôler.

Les informations représentant l'utilisation du véhicule et les informations représentant la ou les caractéristiques techniques, sont enregistrées par des moyens d'enregistrement appropriés tels que des mémoires semi-conductrices, choisis selon le mode d'exploitation des informations enregistrées.

Les moyens de mise à disposition d'un résultat de l'exploitation des informations enregistrées comprennent une mémoire dans laquelle le résultat est inscrit et peut être lu à l'aide de moyens montés sur le véhicule ou raccordés temporairement ou encore, à distance, par un lecteur relié au dispositif de contrôle par des moyens de télécommunication. Ces moyens peuvent être complétés par des moyens d'affichage du résultat.

Si l'on renonce à la possibilité d'une lecture à distance du résultat de l'exploitation des informations, l'enregistrement des différentes informations peut être effectué avec des moyens non électroniques fonctionnant selon le principe du tachygraphe, c'est-à-dire par enregistrement sur un support papier en bande ou en disque. L'exploitation de ces informations aux différentes fins décrites ou évoquées ci-après peut se faire alors automatiquement par tout moyen équipé d'un lecteur optique.

Si, par contre, on souhaite concevoir le dispositif de contrôle selon l'invention pour l'ensemble des applications prévues, il est plus avantageux d'utiliser comme moyens d'enregistrement des différentes informations des moyens d'enregistrement électroniques, optoélectroniques ou magnétiques tels que des appareils fonctionnant avec des mémoires semi-conductrices, des disques laser enregistrables ou des supports magnétiques.

L'exploitation des différentes informations concernant l'utilisation du véhicule et son état technique est effectuée à l'aide de moyens d'exploitation comprenant une mémoire qui est avantageusement de la même nature que celle sur laquelle sont enregistrées les informations concernant l'utilisation du véhicule et de son état technique. Sur cette mémoire sont également enregistrés des critères d'évaluation tels que, par exemple, des valeurs limites d'usure d'un élément du véhicule à contrôler. De préférence, la mémoire destinée à enregistrer ou contenir ces critères d'évaluation est une mémoire semiconductrice, par exemple une mémoire PROM.

Le résultat obtenu par l'exploitation des informations enregistrées se présente sous une forme qui permet aussi bien une utilisation de ce résultat directement sur le véhicule contrôlé que son utilisation ultérieure ou à distance. L'utilisation du résultat de l'exploitation des informations directement sur le véhicule est prévue de deux façons différentes. La première est celle d'un affichage par des moyens d'affichage montés sur le véhicule. Ces moyens d'affichage peuvent être un écran sur lequel apparaît automatiquement, selon une routine enregistrée, ou au moyen d'une commande d'interrogation, un message sous la forme d'un ou de plusieurs symboles ou un message alphanumérique tel, par exemple, un texte comprenant un ou plusieurs mots et/ou nombres. Ce message peut être affiché en différentes couleurs pour permettre à une personne contrôlant l'état du véhicule, de distinguer un message confirmant le bon état du véhicule d'un message avertissant d'un mauvais état ou encore d'un état dangéreux du véhicule. Cet affichage peut également être fait sous la forme d'un allumage continu ou clignotant d'une ou de plusieurs lampes-témoin selon une attribution lampe/caractéristique définie. Une attribution supplémentaire de couleurs selon la nature du message, par exemple la couleur verte pour un message « bon état », la couleur jaune pour un message « mauvais état » et la couleur rouge pour un message « état dangéreux », peut être appliquée à l'affichage par des lampes-témoin de la même façon qu'à l'affichage sur un écran.

La seconde façon prévue pour utiliser le résultat est celle d'un acheminement de signaux correspondants à des moyens permettant une limitation de l'utilisation du véhicule.

Avantageusement, le résultat de l'exploitation des informations est mis à disposition dans des moyens de mise à disposition comprenant une mémoire connectable aux moyens permettant une limitation de l'utilisation du véhicule.

Cette conception selon laquelle le résultat de l'exploitation des informations est mis à disposition dans un dispositif distinct et sous une forme qui permet de s'en servir de différentes manières et à différentes fins, a l'avantage d'agrandir la diversité des applications auxquelles le dispositif de contrôle de l'invention est destiné et, en même temps, de réduire le nombre de types de dispositif nécessaires pour couvrir toutes les variantes de vehicules à contrôler.

Ainsi, selon un mode de réalisation avantageux de l'invention, le dispositif de contrôle est relié, par le biais de la mémoire dans laquelle le résultat de l'exploitation des informations acquises est enregistré et mis à disposition, à un système de gestion extérieure permettant d'exploiter toute ou partie des informations par un poste de contrôle extérieur au véhicule à contrôler. Ce poste de contrôle est situé, par exemple, dans un centre d'entretien chargé de la maintenance du véhicule à contrôler, ou dans un centre de gestion gérant les missions attribuées au véhicule à contrôler. La liaison entre les moyens de mise à disposition du résultat de l'exploitation des informations et le poste de contrôle extérieur peut être établie soit à l'aide d'appareils portables ou d'un câble, que l'on relie au véhicule en question chaque fois que l'on veut exploiter les informations ou par des moyens de télécommunication permettant une transmission à distance des informations.

L'utilisation du résultat de l'exploitation des informations pour limiter l'utilisation du véhicule, est avantageusement mise en oeuvre en reliant les moyens de mise à disposition du résultat de l'exploitation des informations, à un calculateur de bord monté sur le tracteur - ou sur la partie motrice du véhicule si ce dernier est un camion - et par lequel passent tous les signaux émis par les commandes du tracteur destinés aux organes commandés de ce dernier. Cette mise en oeuvre permet, par exemple, de modifier - ou d'adapter - les signaux destinés à l'accélérateur ou aux freins de façon à obtenir une limitation de vitesse à la suite d'une usure anormale des freins ou en fonction de critères semblables. Un critère semblable est, par exemple, celui de la température des freins, car un surchauffement des plaquettes de frein n'a pas uniquement une influence négative momentanée sur la capacité de freinage mais réduit également la durée de vie des plaquettes de freins, ce qui peut entraîner un changement du planning des travaux de maintenance.

Selon une variante de réalisation, les moyens de mise à disposition du résultat de l'exploitation des informations comprennent une mémoire intégrée dans un calculateur de bord d'un tracteur destiné à tracter le véhicule à contrôler, cette mémoire étant conçue de façon à pouvoir recevoir, sous une forme appropriée, le résultat de l'exploitation pour le mettre à disposition du calculateur. Cette mémoire est conçue par ailleurs de façon à être reliée aux moyens de mise à disposition par un réseau interne de communication tel un réseau appelé «controlled area network (CAN)» limité à l'unité tracteur/véhicule, et à recevoir, sous une forme appropriée, le résultat de l'exploitation pour le mettre à disposition du calculateur.

L'alimentation du dispositif de contrôle est assurée soit par une batterie lorsque le véhicule routier est un camion équipé d'une batterie, soit par la batterie du tracteur lorsque le véhicule routier est une remorque ou une semi-remorque et qui est attelé au tracteur.

Cependant, lorsque le véhicule routier est une remorque ou une semi-remorque, l'alimentation du dispositif de contrôle doit être assurée par d'autres moyens le temps que le véhicule n'est pas attelé à un tracteur. A cette fin, selon un mode de réalisation avantageux de l'invention, le dispositif de contrôle comprend une alimentation électrique autonome destinée à être montée sur le véhicule à contrôler. Cette alimentation électrique autonome peut avoir la forme d'une batterie, d'un condensateur ou de tout autre moyen de stockage d'énergie électrique. Ce moyen de stockage d'énergie électrique est chargé par le générateur du tracteur lorsque la remorque ou la semi-remorque est attelée. Selon une variante, le moyen de stockage d'énergie électrique peut être chargé par un générateur monté sur la remorque ou la semi-remorque. Compte tenu de la relativement faible quantité d'énergie nécessaire pour le dispositif de contrôle selon l'invention, le générateur peut être de faible puissance, avoir des petites dimensions et être actionné, par exemple par une des roues du véhicule ou par le vent, lorsque le véhicule se déplace.

L'alimentation électrique autonome peut également avoir la forme d'un générateur photoélectrique tel qu'un panneau de photopiles complété, le cas échéant, par une batterie-tampon.

Avantageusement, le dispositif de contrôle comprend des moyens de vérification du fonctionnement du dispositif. Ces moyens de vérification sont conçus de façon que toute rupture de circuit se traduit par une information telle que, par exemple, le message « utilisation non enregistrée ». Le cas échéant, l'information indiquant une rupture de circuit du dispositif de contrôle peut être émise simultanément par différentes voies. Ainsi, ledit message ou un signal lumineux d'une lampe-témoin peut être présenté sur un panneau approprié du dispositif de contrôle et peut être affiché simultanément sur un panneau indicateur d'un dispositif de gestion centralisée où sont exploitées, à distance, les informations enregistrées par chacun des dispositifs de contrôle gérés par ce dispositif de gestion centralisée ou par l'exploitation des résultats transmis par les différents dispositifs de contrôle ou dispositifs de gestion centralisée.

Selon encore un autre mode de réalisation avantageux de l'invention, les moyens générateurs d'informations représentant l'utilisation du véhicule à contrôler comprennent des moyens de détection de la position géographique du véhicule. Cette détection de la position géographique peut être effectuée à partir d'un point de référence extérieur au dispositif de contrôle ou, à partir du dispositif de contrôle, par rapport à un point de référence extérieur au dispositif. Le point de référence extérieur peut être, par exemple, un satellite émettant des signaux à cet effet. Que le véhicule soit en marche ou à l'arrêt, la détection sur commande, par exemple par interrogation, ou la détection continue, de la position géographique du véhicule permet un suivi en temps et en distance parcourue, de l'utilisation du véhicule.

Le but de l'invention est également atteint par un système électronique embarqué destiné au suivi d'au moins un véhicule routier et à l'aide à la maintenance de ce (ou de ces) véhicule(s).

Conformément à l'invention, le système électronique embarqué comprend pour chaque véhicule à contrôler un dispositif de contrôle comportant des moyens d'identification du véhicule à contrôler, des moyens générateurs d'informations représentant l'utilisation du véhicule à contrôler, des moyens d'acquisition d'informations représentant la ou les caractéristiques à contrôler, des moyens d'enregistrement d'informations, des moyens d'exploitation des informations enregistrées et des moyens de mise à disposition d'un résultat de l'exploitation des informations enregistrées. Le système électronique comprend, en plus, pour l'ensemble des véhicules à contrôler, des moyens de lecture des résultats d'exploitation des informations de chacun des véhicules, des moyens de mise à disposition des résultats d'exploitation et des moyens d'affichage de l'ensemble des résultats.

Le système électronique embarqué défini ci-avant est conçu de façon à permettre à la fois une utilisation du résultat de l'exploitation des informations enregistrées sur le véhicule même au sujet duquel les informations enregistrées ont été acquises, et une lecture à distance des informations enregistrées au sujet d'un ou de plusieurs véhicules ou l'utilisation des résultats de l'exploitation des informations, résultats transmis à distance.

Selon une variante du mode de réalisation du système électronique embarqué, chacun des dispositifs de contrôle attribué à un véhicule à contrôler est pourvu de moyens d'affichage du résultat de l'exploitation des informations enregistrées.

D'autres caractéristiques et avantages de l'invention ressortiront de la description de deux modes de réalisation décrits ci-après en référence aux dessins. Dans ces dessins:
La Figure 1 représente un premier mode de réalisation d'un dispositif de contrôle selon l'invention,
Les Figures 2 et 3 représentent un second mode de réalisation d'un dispositif de contrôle selon l'invention,
La Figure 4 montre schématiquement la disposition d'un dispositif de contrôle dans une semi-remorque, et
La Figure 5 montre le schéma d'un système électronique embarqué selon l'invention.

Selon un premier mode de réalisation de l'invention, le dispositif de contrôle A monté sur un premier véhicule à contrôler comprend des moyens d'identification 1 sous la forme d'une mémoire dans laquelle sont enregistrées des données d'identification du dispositif de contrôle ou du véhicule à contrôler ou les deux à la fois. Le dispositif de contrôle comprend également des moyens générateurs d'informations 2 qui engendrent des informations représentant l'utilisation du véhicule à contrôler. Plus particulièrement, ces moyens générateurs 2 comprennent une horloge et un calendrier ou agenda interne ou ils comprennent un récepteur-radio permettant de recevoir ces informations d'un émetteur central. Les moyens générateurs d'informations 2 engendrent également, à partir d'un compteur kilométrique, des informations concernant une distance parcourue par le véhicule à contrôler.

Le dispositif de contrôle comprend en outre des moyens d'acquisition d'informations 3 qui engendrent des signaux électriques resprésentant la ou les caractéristiques techniques à suivre du véhicule à contrôler. Ces moyens d'acquisition ont dans la plupart des applications la forme de capteurs dont la nature et la disposition sont adaptées à la caractéristique technique ou aux caractéristiques techniques à suivre et constituant l'état technique d'un véhicule à contrôler.

Les informations fournies par les moyens générateurs d'informations 2 et les moyens d'acquisition d'informations 3 sont enregistrées dans des moyens d'enregistrement d'informations 4 qui se présentent avantageusement, mais non exclusivement, sous la forme d'une mémoire à circuits intégrés. Cette mémoire 4 est reliée à des moyens d'exploitation 5 des informations enregistrées qui ont en même temps la fonction d'une unité centrale du dispositif de contrôle. L'unité centrale 5 compare les informations venant des moyens d'acquisition d'informations 3 et les compare à des valeurs limites enregistrées dans une mémoire 51 pour en déduire, le cas échéant, des signaux d'alarme ou des messages avertissant l'utilisateur du véhicule à contrôler et/ou le gestionnaire du véhicule à contrôler, de l'approche ou de l'échéance d'une intervention de maintenance.

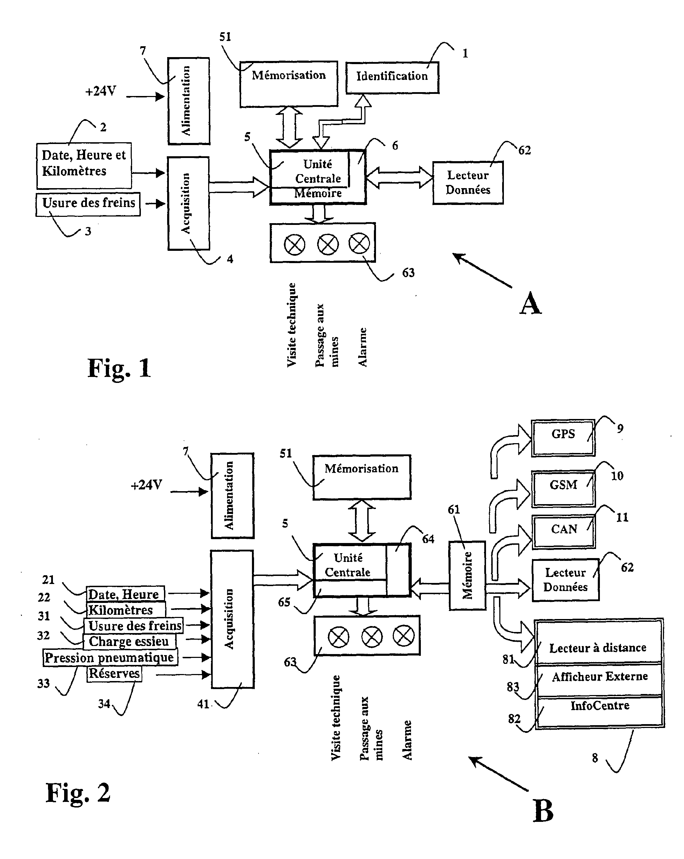

Si, à titre d'exemple comme cela est représenté sur la Figure 1, la caractéristique technique à suivre est l'usure des freins, un capteur monté sur les freins de chacune des roues du véhicule émet un signal représentant l'épaisseur actuelle des plaquettes ou garnitures de freins. La mémoire 4 enregistre ces données ensemble avec la date et l'heure et le point kilométrique du véhicule au moment de l'enregistrement et tient ces données à disposition de l'unité centrale 5. L'unité centrale 5 compare ces données avec la valeur minimale admise, enregistrée dans la mémoire 51 et en déduit - comme résultat de l'exploitation des informations enregistrées - l'usure des freins. Ce résultat est enregistré dans une mémoire 6 à partir de laquelle il est disponible, par exemple pour en déduire des signaux électriques d'affichage.

Le temps qu'une première valeur-seuil n'est pas encore atteinte, un message « OK » est affiché sur un écran intégré clans le dispositif de contrôle ou une lampe-témoin 63 indique le bon état des freins. Lorsque la première valeur-seuil est atteinte, un message indiquant l'approche de l'intervention de maintenance est affichée ou signalé par une autre lampe-témoin 63. Lorsqu'un second seuil est atteint, signalant l'usure maximale admise des freins, un autre message est affiché et/ou un signal d'alarme, par exemple sous la forme du clignotement d'une troisième lampe-témoin 63, est déclenché. Les deux seuils peuvent être, par exemple, 70% et 90% d'usure. Les trois lampes-témoins 63 décrites ci-avant peuvent être trois lampes distinctes, éventuellement de couleurs différentes. Elles peuvent également se présenter sous la forme d'une lampe combinée ayant l'apparence d'une lampe unique et indiquant les trois messages évoqués par trois couleurs différentes.

Par ailleurs, comme le montrent les Figures 1 et 2, les lampes-témoin référencées sommairement et sans distinction de leur fonction en 63, peuvent afficher aussi d'autres messages, mais qui - selon l'exemple choisi - sont indépendant de l'état des freins: l'arrivée à une date donnée ou à un point kilométrique donné correspondant à une échéance de visite technique ou à un passage aux Mines. Ces deux échéances peuvent aussi déclencher simultanément un affichage d'un message correspondant sur l'écran intégré au dispositif de contrôle.

De même, le nombre de lampes-témoin peut être plus grand que ne le montrent les figures 1 et 2 et/ou les lampes-témoin peuvent être disposées sur un panneau de consultation locale visibles à une distance de un ou plusieurs mètres.

Avantageusement, la mémoire 6 est conçu de façon à pouvoir être reliée à un lecteur de données 62 pourvu, lui aussi, d'une mémoire à laquelle les informations enregistrées dans la mémoire 6 peuvent être transmises afin d'être traitées ultérieurement dans un centre de gestion ou dans un centre de maintenance.

Le dispositif de contrôle selon le premier mode de réalisation de l'invention, décrit jusqu'ici, est un dispositif de base comprenant les moyens et fonctions nécessaires au contrôle et suivi d'un véhicule routier.

Selon un second mode de réalisation de l'invention, le dispositif de contrôle peut être complété par une pluralité de capteurs dont chacun est attribué à un élément du véhicule à contrôler pour contrôler et suivre une caractéristique technique correspondante. Le dispositif de contrôle peut également être complété par des moyens permettant une gestion à distance de ce dispositif de contrôle ou de plusieurs de ces dispositifs et une exploitation à distance des informations enregistrées et mises à disposition par ce (ou ces) dispositif(s) de contrôle.

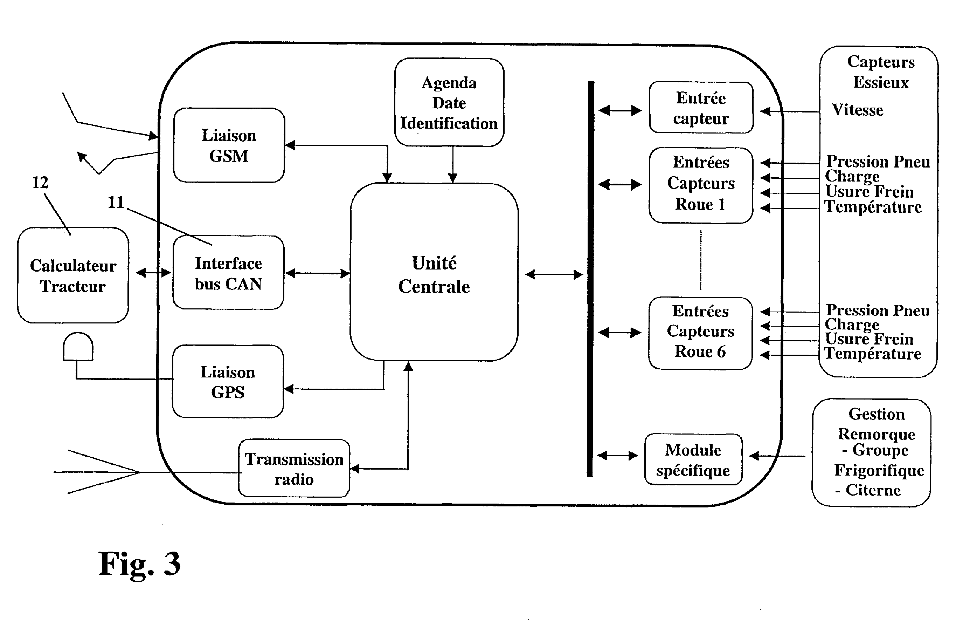

Ainsi, le dispositif de contrôle B selon le second mode de réalisation, représenté sur les Figures 2 et 3, est un dispositif complété qui comprend, outre les moyens et fonctions de base du premier mode de réalisation, des moyens et fonctions supplémentaires qui permettent de gérer, à partir d'un centre de gestion et d'exploitation centrales 8, plusieurs dispositifs de contrôle constituant avec le centre 8, un système électronique embarqué. Ce système comprend pour l'ensemble des véhicules à contrôler, des moyens de lecture 81 des résultats d'exploitation des informations de chacun des véhicules, des moyens de mise à disposition 82 des résultats d'exploitation, et des moyens d'affichage 83 de l'ensemble des résultats.

Ce système électronique embarqué est destiné au suivi de véhicules routiers et est destiné en même temps à l'aide à la maintenance de ces véhicules. Dans un tel système électronique, les dispositifs de contrôle peuvent être du même type. Mais ces dispositifs de contrôle peuvent être aussi de différents types pour tenir compte de certaines caractéristiques techniques particulières de l'un ou de l'autre des véhicules à contrôler. Que les dispositifs de contrôle soient du même type ou de types différents ne change, cependant, en rien ni le fonctionnement du système, ni celui des dispositifs de contrôle.

Cependant, l'utilisation de différents types de dispositifs de contrôle peut rendre utile d'intégrer dans les informations d'identification enregistrées dans la mémoire 51, des informations sur le dispositif lui-même, notamment sur son type.

Car, si un véhicule à contrôler ne peut pas être équipé d'un dispositif de contrôle approprié, il peut recevoir, à titre de dépannage, un dispositif qui ne peut contrôler l'ensemble des caractéristiques prévues. Dans cette situation, l'identification du dispositif de contrôle, en plus de l'identification du véhicule, permet de comprendre que l'absence de certaines informations dans le résultat de l'exploitation des informations n'est pas liée à un malfonctionnement du dispositif de contrôle.

D'un autre côté, ce dépannage permet de suivre quand même les caractéristiques les plus importantes au lieu de devoir renoncer au suivi du véhicule.

Dans le dispositif de contrôle B, représenté sur les Figures 2 et 3, les moyens d'enregistrement d'informations sont constitués par une mémoire d'acquisition 41 qui reçoit les informations de différents capteurs tels qu'un horodateur 21 fournissant des informations sur la date et l'heure à laquelle une caractéristique technique est mesurée et enregistrée, un compteur kilométrique 22 permettant d'enregistrer le point kilométrique chaque fois que les informations sur les caractéristiques techniques sont enregistrées, des capteurs 31 permettant de surveiller l'usure des freins, un capteur 32 permettant de surveiller la charge des essieux, des capteurs 33 permettant de surveiller la pression des pneumatiques et d'autres capteurs résumés par la référence 34 qui permettent de contrôler et de suivre d'autres caractéristiques, par exemple la pression dans les coussins pneumatiques de la suspension. Les capteurs 31 à 34 sont avantageusement de type analogique, l'amplitude de leur signal correspondant alors à la valeur mesurée. Toutefois, des capteurs à sorties logiques donnant des signaux par paliers sont également utilisable sans risque de sortir du cadre de l'invention.

Les moyens d'exploitation 5 des informations enregistrées du dispositif de contrôle B comprennent une mémoire 61 connectable à un centre de gestion et d'exploitation centrales 8 et une mémoire 64 dans laquelle le résultat de l'exploitation des informations enregistrées, résultat venant des moyens 5, est mis à disposition. La mémoire 64 peut être identique ou, pour le moins, peut correspondre, à la mémoire 61. Cependant, pour des raisons techniques, notamment en cas de besoin de formats différents pour les informations, le choix d'une mémoire 64 différente de la mémoire 61 peut être avantageux.

Ainsi, la mémoire 64 peut être choisi pour enregistrer des signaux particulièrement adaptés à des moyens permettant de limiter l'utilisation du véhicule. Les moyens permettant de limiter l'utilisation du véhicule peuvent se présenter sous différentes formes. A titre d'exemple, est évoqué ici, un limiteur de vitesse intervenant en cas de perte de pression dans les pneumatiques ou encore en cas de surchauffement des plaquettes ou garnitures de freins. Tout actionnement des moyens permettant de limiter l'utilisation du véhicule peut engendrer de sa part un signal (ou des données) destiné(es) à être enregistré(es) dans une mémoire 65 dans laquelle le résultat de l'exploitation des informations est mis à disposition sous une forme adaptée aux moyens d'affichage 63 et, le cas échéant, l'affichage d'un message sur un écran d'affichage intégré au dispositif de contrôle.

Le dispositif de contrôle complété B comprend par ailleurs un récepteur GPS (Global Positioning System) 9 et des moyens de télécommunications 10 permettant respectivement de détecter à tout moment la position géographique du véhicule à contrôler et de communiquer avec le centre de gestion 8 pour la transmission des informations enregistrées. Les moyens de télécommunications sont signalés sur les Figures 2 à 4 comme étant des équipements GSM. Le dispositif de contrôle B comprend enfin un module CAN (Controlled Area Network) 11 qui permet de relier le dispositif de contrôle d'un véhicule à contrôler à un calculateur de bord 12 d'un tracteur destiné à tracter le véhicule à contrôler. Ce module CAN 11 constitue un réseau de communication limité à l'unité tracteur/véhicule.

Selon une variante, les moyens de mise à disposition du résultat de l'exploitation des informations comprennent une mémoire intégrée dans le calculateur de bord du tracteur, cette mémoire étant conçue de façon à être reliée aux moyens de mise à disposition par le module CAN et à recevoir, sous une forme appropriée, le résultat de l'exploitation pour le mettre à disposition du calculateur 12.

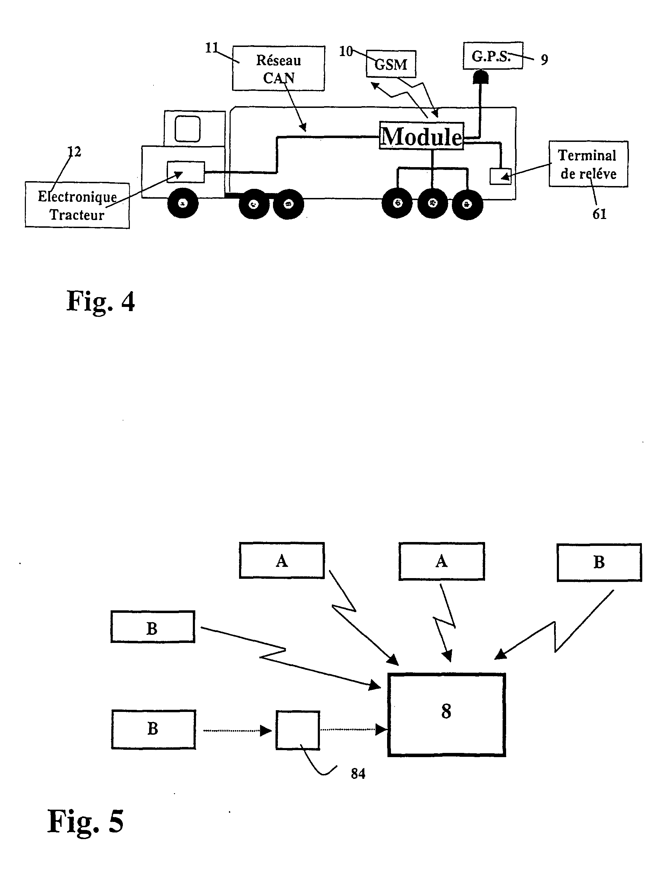

Sur la Figure 4, qui montre schématiquement un exemple de disposition de ces éléments du dispositif de contrôle B, l'élément appelé « Module » représente sommairement les principaux éléments du dispositif de contrôle selon l'invention, notamment l'unité centrale 5, les mémoires 51, 61, 64 et 65 décrites plus haut. Une telle disposition est particulièrement avantageuse dans la mesure où elle permet au conducteur du tracteur d'être informé continuellement sur l'état technique de la remorque ou semi-remorque, pendant la marche ou le déplacement de celle-ci, et cela indépendamment de la possibilité de limiter automatiquement l'utilisation du vehicule à contrôler.

Le dispositif de contrôle de l'invention, quel que soit le mode de réalisation choisi, comprend avantageusement une alimentation électrique autonome 7 montée sur les véhicules à contrôler. Cette disposition est particulièrement avantageuse dans le cas où le véhicule à contrôler est une remorque ou une semi-remorque puisque ce type de véhicule n'est normalement pas équipé d'une batterie ni de tout autre générateur d'énergie électrique. Cependant, assurer l'alimentation continue en l'électricité du dispositif de contrôle autrement que par une batterie-tampon permettant le maintien des données enregistrées dans la mémoire, permet de suivre les caractéristiques techniques du véhicule à contrôler également pendant les périodes où le véhicule n'est pas attelé à un tracteur et lorsque l'alimentation par la batterie (cas du camion) ou par la batterie du tracteur (cas du semi-remorque) est interrompue ou ne présente pas les caractéristiques électriques nécessaires.

Selon des variantes de l'un ou de l'autre des deux modes de réalisation décrits plus haut, le dispositif de contrôle selon l'invention est conçu de manière spécifique selon le type de véhicule à contrôler. Une de ces variantes est celle selon laquelle une partie de la capacité de calcul est située dans le calculateur 12 du tracteur ou du camion.

Une telle disposition est particulièrement avantageuse dans la mesure où de plus en plus de fonctions liées à la conduite du camion ou du tracteur sont gérées par un calculateur ou ordinateur de bord. Dans ce cas, il est avantageux de prendre en compte, pour la conduite du camion ou du tracteur, des informations sur certaines caractéristiques techniques explicitées plus haut à l'exemple de la remorque ou semi-remorque.

Le système électronique embarqué représenté sur la Figure 5 est destiné, à titre d'exemple, au suivi de cinq véhicules routiers et à l'aide à la maintenance de ces véhicules. Ce système comprend pour chaque véhicule à contrôler un dispositif de contrôle, tels que ceux décrits plus, dont deux sont de type A et trois de type B.

Alors que les deux dispositifs de type A et deux de trois dispositifs de type B sont relié au centre 8 par des moyens de télécommunication, le troisième des trois dispositifs de type B est relié au centre 8 par un appareil portable 84. Cet appareil portable 84 est pourvu d'une mémoire identique ou correspondante à la mémoire 61 et est relié au véhicule en question chaque fois que l'on veut exploiter les informations enregistrées dans la mémoire 61. Lorsque les informations sont lues, c'est-à-dire transférées dans la mémoire de l'appareil 84, ce dernier est débranché, transporté au centre de maintenance ou de gestion 8 et relié à des moyens d'exploitation propres à ce centre.

## Revendications

1. Dispositif de contrôle (A, B) permanent d'au moins une caractéristique technique d'un véhicule routier destiné à être monté sur le véhicule à contrôler,
caractérisé en ce que le dispositif de contrôle comprend
• des moyens d'identification (1) du véhicule à contrôler,
• des moyens générateur d'informations (2) représentant l'utilisation du véhicule à contrôler,
• des moyens d'acquisition d'informations (3) représentant la (ou) les caractéristique(s) technique(s) à contrôler,
• des moyens d'enregistrement d'informations (4),
• des moyens d'exploitation (5) des informations enregistrées, et
• des moyens de mise à disposition (6) d'un résultat de l'exploitation des informations enregistrées.

2. Dispositif selon la revendication 1, caractérisé en ce que les moyens générateur d'informations (2) représentant l'utilisation du véhicule à contrôler comprennent des moyens horodateurs (21) et un compteur kilométrique (22), permettant un suivi en temps et en distance parcourue de l'utilisation du véhicule, et en ce que les moyens d'acquisition d'informations (3) représentant la (ou les) caractéristique(s) technique(s) du véhicule à contrôler comprennent un capteur (31-34) pour chaque caractéristique technique à contrôler.

3. Dispositif selon la revendication 1 ou 2, caractérisé en ce que les moyens d'enregistrement d'informations (4) comprennent une mémoire (41) destinée à enregistrer les informations provenant respectivement des moyens générateurs d'informations (2) et des moyens d'acquisition d'informations (2), et qui est apte à être lue à l'aide des moyens d'exploitation (5).

4. Dispositif selon l'une quelconque des revendications précédentes, caractérisé en ce que les moyens d'exploitation (5) des informations enregistrées comprennent une mémoire (51) destinée à tenir à disposition des moyens d'exploitation (5), des informations représentant des critères d'évaluation, telles que des valeurs limites de la caractéristique technique d'un élément du véhicule à contrôler.

5. Dispositif selon l'une quelconque des revendications précédentes, caractérisé en ce que les moyens de mise à disposition (6) du résultat de l'exploitation des informations comprennent une mémoire (61) connectable à un système de gestion extérieur (8).

6. Dispositif selon l'une quelconque des revendications précédentes, caractérisé en ce que les moyens de mise à disposition (6) du résultat de l'exploitation des informations comprennent des moyens d'affichage (62, 63) du résultat de l'exploitation des informations.

7. Dispositif selon l'une quelconque des revendications précédentes, caractérisé en ce que les moyens de mise à disposition (6) du résultat de l'exploitation des informations comprennent une mémoire (64) connectable à des moyens permettant de limiter l'utilisation du véhicule.

8. Dispositif selon l'une quelconque des revendications précédentes, caractérisé en ce qu'il comprend une alimentation électrique (7) autonome destinée à être montée sur le véhicule à contrôler.

9. Dispositif selon l'une quelconque des revendications précédentes, caractérisé en ce qu'il comprend des moyens de vérification (65) du fonctionnement du dispositif de contrôle, destinée à traduire toute rupture de circuit par une information telle que « utilisation non enregistrée ».

10. Dispositif selon l'une quelconque des revendications précédentes, caractérisé en ce que les moyens générateur d'informations (2) représentant l'utilisation du véhicule à contrôler comprennent des moyens de détection (9) de la position géographique du véhicule à contrôler à partir d'un point de référence extérieur au dispositif, permettant un suivi en temps et en distance parcourue de l'utilisation du véhicule.

11. Dispositif selon l'une quelconque des revendications précédentes, caractérisé en ce qu'il comprend des moyens de télécommunication (10) permettant de transmettre à distance le résultat de l'exploitation des informations.

12. Dispositif selon l'une quelconque des revendications précédentes, caractérisé en ce que les moyens de mise à disposition du résultat de l'exploitation des informations (6, 61) comprennent une mémoire intégrée dans un calculateur de bord (12) d'un tracteur destiné à tracter le véhicule à contrôler, cette mémoire étant conçue de façon à être reliée aux moyens de mise à disposition (6, 61) par un réseau interne de communication (11) limité à l'unité tracteur/véhicule et à recevoir, sous une forme appropriée, le résultat de l'exploitation pour le mettre à disposition du calculateur (12).

13. Système électronique embarqué destiné au suivi de véhicules routiers et à l'aide à la maintenance de ces véhicules,
caractérisé en ce qu'il comprend:
• pour chaque véhicule à contrôler un dispositif de contrôle (A, B, C) comportant:
- des moyens d'identification du véhicule à contrôler,
- des moyens générateur d'informations représentant l'utilisation du véhicule à contrôler,
- des moyens d'acquisition d'informations représentant la (ou les) caractéristique(s) technique(s) à contrôler,
- des moyens d'enregistrement d'informations,
- des moyens d'exploitation des informations enregistrées et
- des moyens de mise à disposition d'un résultat de l'exploitation des informations enregistrées;
• pour l'ensemble des véhicules à contrôler:
- des moyens de lecture (81) des résultats d'exploitation des informations de chacun des véhicules,
- des moyens de mise à disposition (82) des résultats d'exploitation, et
- des moyens d'affichage (83) de l'ensemble des résultats.
